(19) **Europäisches Patentamt**

**European Patent Office**

**Office européen des brevets**

(11) Veröffentlichungsnummer : **0 202 218 B2**

(12) **NEUE EUROPÄISCHE PATENTSCHRIFT**

(45) Veröffentlichungstag der neuen Patentschrift :
27.12.91 Patentblatt 91/52

(51) Int. Cl.⁵ : **F16F 1/18**

(21) Anmeldenummer : **86890137.2**

(22) Anmeldetag : **14.05.86**

(54) **Blattfeder.**

(30) Priorität : **17.05.85 DE 3517807**

(43) Veröffentlichungstag der Anmeldung :
**20.11.86 Patentblatt 86/47**

(45) Bekanntmachung des Hinweises auf die
Patenterteilung :
**15.03.89 Patentblatt 89/11**

(45) Bekanntmachung des Hinweises auf die
Entscheidung über den Einspruch :
**27.12.91 Patentblatt 91/52**

(84) Benannte Vertragsstaaten :
**AT DE FR GB IT SE**

(56) Entgegenhaltungen :
**EP-A- 0 040 531**
**DE-A- 2 731 577**

(56) Entgegenhaltungen :
**FR-A- 1 411 011**
**GB-A- 2 125 929**
**GB-A- 2 131 347**
**Tagungsband der 22. Internationalen Chemie-**
**fasertagung, Dornbirn, Oesterreich vom 08.**
**bis 10.06.83, Seiten 155 bis 174**

(73) Patentinhaber : **BÖHLER**
**AKTIENGESELLSCHAFT**
**Hansaallee 321**
**W-4000 Düsseldorf 11 (DE)**

(72) Erfinder : **Puck, Alfred, Prof. Dr.-Ing.**
**Am Ahlberg 33**
**W-3524 Immenhausen-Mariendorf (DE)**
Erfinder : **Götte, Timo, Dipl.-Ing.**
**Elfbuchenstrasse 22**
**W-3500 Kassel (DE)**
Erfinder : **Krug, Günter, Dipl.-Ing.**
**Brunslarer Strasse 31**
**W-3501 Guxhagen (DE)**

EP 0 202 218 B2

**Beschreibung**

Die Erfindung bezieht sich auf eine Blattfeder mit zumindest zwei unterschiedlichen miteinander verbundenen Lagen aus faserverstärktem, duroplastischem Kunststoff mit gleichen Anteilen an in Federlängsrichtung orientierten Fasern, wobei die zur Zugseite der Blattfeder nähere Lage dünnere Fasern, eine geringere Dicke und eine höhere Dauerfestigkeit bei schwingender Belastung aufweist als die andere Lage.

Die federnden Eigenschaften von glasfaserverstärkten Kunststoffen sind bereits seit langer Zeit bekannt, wobei durch den Einsatz von derartigen Blattfedern bei Fahrzeugen, insbesondere Straßenfahrzeugen, verschiedenste Vorteile erwartet werden. Das Gewicht von glasfaserverstärkten Blattfedern ist jedenfalls wesentlich geringer, wobei auch ein höherer Federkomfort erwartet wird. Eine ganz wesentliche Eigenschaft besteht jedoch auch darin, daß zum Unterschied von Stahlfedern kein plötzlicher Bruch auftritt, sondern die Feder langsam desintegriert, womit keine konstruktiven Vorkehrungen zur Absicherung bei einem Federbruch erforderlich sind.

Derartige Blattfedern sind gegebenenfalls mehrschichtig aufgebaut, wobei zumindest eine Schicht vorgesehen ist, deren Fasern sich in Federlängsrichtung erstrecken. So wird beispielsweise aus der FR-A-1411011 eine Feder bekannt, die sowohl zur Druckseite als auch zur Zugseite eine vermutlicherweise identische unidirektionale Faserverstärkung aufweist, wobei zwischen diesen beiden Schichten eine Schicht mit einem Wirrfaservlies angeordnet ist, das offensichtlich ausgleichend zwischen der oberen und unteren Schicht der Feder wirken soll. Derartige Federn besitzen jedoch den Nachteil, daß die Schubfestigkeit der angeordneten Schicht mit dem Faservlies gering gegenüber derjenigen mit der unidirektionalen Faserverstärkung ist, womit die Feder bzw. das Federblatt in seinem Gesamtaufbau geschwächt und nur eine geringere Lebensdauer als andere Federn bekannter Bauart aufweisen kann.

Es ist nach GB-A-2125929 eine Blattfeder aus mit Glasfaser verstärktem Kunststoff bekannt, die zwei unterschiedliche Lagen von in Längsrichtung verlaufenden Fasern aufweist. Die Lage nahe der Außenfläche, die mit der größten Zugspannung belastet wird, weist dünnere Fasern, die andere Lage dickere Fasern auf. Damit wird eine höhere ertragbare Dehnung erzielt. Nachteilig ist, daß nur die Erkenntnis dieser Ausbildung noch keine optimale Dimensionierung der Blattfeder zu erkennen gibt.

Weiters ist nach GB-A-2131347 die Herstellung von Blattfedern bekannt, die an der Außenseite von GFK-Blattfedern Schutzschichten verwendet.

Die vorliegende Erfindung hat sich zum Ziel gesetzt, eine Feder mit faserverstärktem Kunststoff zu schaffen, die bei einfachem Aufbau der Feder auch bei Extrembelastungen der Feder, z.B. sogenanntem S-Schlag der Feder, nicht zerstört wird.

Weiters soll eine gute Kraftübertragung von den einzelnen Schichten der Feder untereinander gewährleistes sein, um ein Trennen der einzelnen Schichten voneinander und damit eine wesentliche Änderung der Federeigenschaften zu vermeiden.

Erfindungsgemäß wird das Ziel dadurch erreicht, daß die zur Zugseite nähere Lage 3 eine zumindest um 10%, vorzugsweise 15%, höhere ertragbare Dehnung bei schwingender Belastung bis $10^5$ Lastwechseln aufweist, und daß die Dicke dieser Lage 3 mit der höheren ertragbaren Dehnung 1% bis 10% der Gesamtdicke der Blattfeder beträgt.

Es war durchaus überraschend, daß bei unterschiedlicher unidirektionaler Faserverstärkung von zumindest zwei Lagen diese an sich zueinander in ihren Dehneigenschaften ganz unterschiedlichen Lagen nicht zu einem Desintegrieren der Feder führen, sondern eine Erhöhung und zwar bis zu 10 fache Erhöhung der Lebensdauer bewirken, da die Zugseite der Feder, von welcher die Zerstörungen der Feder ausgehen, eine wesentlich höhere Lebensdauer aufweisen kann.

Gemäß einem weiteren Merkmal der vorliegenden Erfindung ist eine weitere Lage auf der und mit dieser verbundenen Lage mit der höheren maximal ertragbaren Dehnung vorgesehen, die als Fasereinlage ein in Federlängsrichtung orientiertes Vlies aus organischen Fasern aufweist. Ein derartiges Vlies hat zur Aufgabe, die Fasern, und zwar auch die Fasern mit höherer maximal ertragbaren Dehnung, gegen mechanische Beschädigung zu schützen, wobei die Dehneigenschaften des Vlieses, insbesondere bei Längsorientierung durch keine kerbstellenbildenden Querrisse, die Ausgangsstellen für die Desintegration der Feder darstellen würden, gestört werden.

Umgreift die weitere Lage Kanten der Blattfeder, insbesondere auch die Lage mit der niedrigeren maximal ertragbaren Dehnung, so sind auch jene Fasern, die an der seitlichen Oberfläche zur Feder liegen, vor einer vorzeitigen Zerstörung geschützt, wobei auch der Übergang zwischen den unterschiedlichen Lagen vor solch vorzeitiger Zerstörung besonders gut geschützt ist.

Die Lage mit niedrigerer maximal ertragbarer Dehnung kann mit Fasern aus anorganischem Glas aufgebaut sein, wobei es besonders vorteilhaft ist, wenn die Fasern mit höherer maximal ertragbaren Dehnung ebenfalls mit anorganischem Glas aufgebaut sind. In diesem Falle wird besonders auch der gleichartigen chemischen Beanspruchbarkeit Rechnung getragen, die durchaus bei Kraftfahrzeugen- denkt man an die an sich chemisch aggressiven Oberflächenwässer der Straßen- von hoher Bedeutung sein kann.

Es können jedoch auch Fasern, die im wesentlichen organischen Aufbau besitzen, z.B. Aramidfasern, auch in Kombination mit Glasfasern verwendet werden, wobei ebenfalls der erfindungsgemäße Effekt erreichbar ist.

Im folgenden wird die Erfindung anhand des Beispieles und der Zeichnungen näher erläutert.

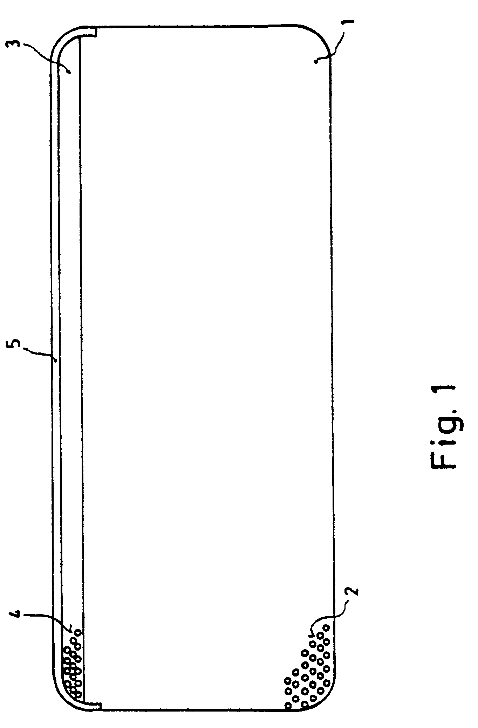

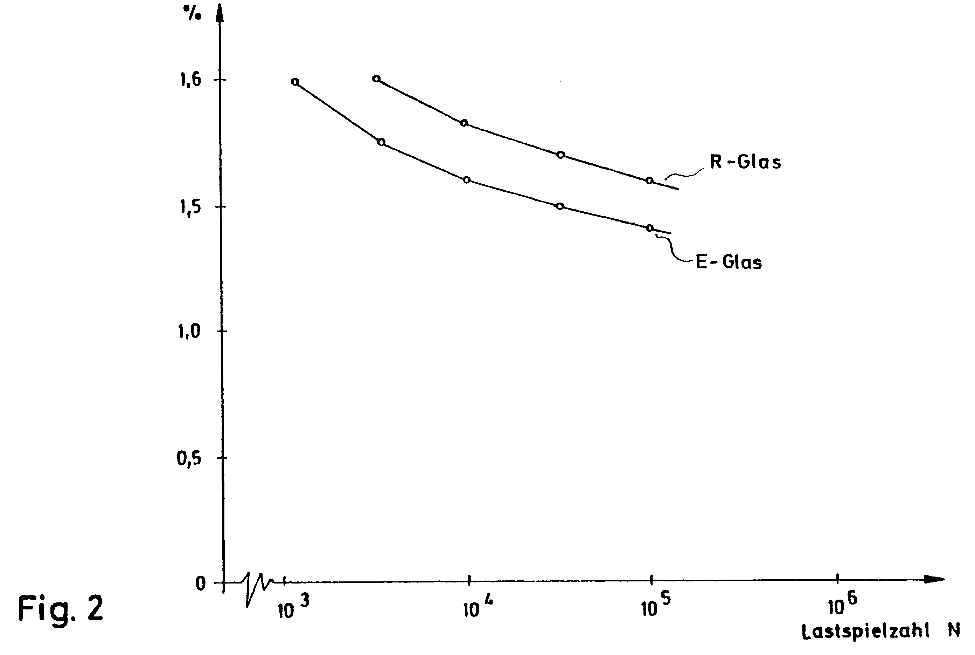

Fig. 1 zeigt einen Querschnitt durch ein erfindungsgemäßes Federblatt und in Fig. 2 ist ein Diagramm über die maximal ertragbare Dehnung dargestellt.

Das in der genannten Fig. 1 im Schnitt dargestellte Parabelfederblatt weist eine Lage 1 auf der Druckseite der Feder auf, die unidirektional, und zwar in Federlängsrichtung orientiert, durchgehende Glasfasern 2 (nur teilweise im Schnitt dargestellt) besitzt. Diese Glasfasern sind in einem duroplastischen Kunststoff, und zwar Epoxidharz, eingebettet. Diese Glasfasern 2 aus E-Glas weisen die in der Tabelle 1 angegebene chemische Zusammensetzung und physikalische Eigenschaften auf. Dieser Lage 1 direkt anschließend zur Zugseite ist eine weitere Lage 3 mit Glasfasern 4 aus R-Glas vorgesehen, die ebenfalls in dem oben angeführten duroplastischen Kunststoff eingebettet sind, wobei die, wie im folgenden beschrieben, zu bestimmende, maximal ertragbare Dehnung dieser um zirka 15% höher als jene der Glasfasern 2 ist. Die physikalischen und chemischen Eigenschaften sind ebenfalls der Tabelle 1 entnehmbar. Weiters ist eine Lage 5 vorgesehen, die als Fasereinlage ein Vlies, und zwar ein in Federlängsrichtung orientiertes Vlies aus Polyester, im Handel unter der Bezeichnung Fiberil, einer organischen Faser aufweist. Diese Lage 5, welche auch ein Vlies aus Polyacryl enthalten kann, umgreift, wie besonders deutlich der Fig. 1 zu entnehmen, sowohl die Lage 3 mit der höheren maximal ertragbaren Dehnung als auch die Lage 1 mit der geringeren maximal ertragbaren Dehnung. Im übrigen entspricht der Aufbau der Blattfeder den im Anspruch 1 angegebenen Merkmalen.

Es wurden fünf Federn ohne Lage 3 und fünf Federn mit Lage 3 gefertigt und sodann einer Dauerbelastung unterworfen. Es zeigte sich, daß im Durchschnitt nach 30000 Lastzyklen unter gleichen Bedingungen die Federn ohne Lage 3 bereits Desintegrationserscheinungen, d.h. einzelne Faserstränge waren aufgefasert, aufwiesen, wohingegen mit der Lage 3 bei 300000 Lastzyklen noch keine Desintegrationserscheinungen auftraten. Es konnte somit die Lebensdauer einer Feder unter sonst gleichem Aufbau auf das 10 fache erhöht werden.

Analoge Werte wurden erhalten, wenn anstelle der anorganischen Gläser für die Lage 3 Aramidfasern verwendet wurden.

Aus der Feder wurden sowohl aus der Lage 1 als auch der Lage 3 Proben einer Abmessung von 250 × 30 × 5 mm entnommen. Diese Proben, deren Längskanten parallel zur Faserrichtung verlaufen, wurden im Dreipunktbiegeversuch im Abstand von 240 mm aufgelagert und eine Kraft eingebracht, daß jeweils die im Diagramm angegebene Dehnung erreicht wurde. Wie dem Diagramm zu entnehmen, weist beispielsweise bei einer Dehnung von 1,6% die Lage mit dem E-Glas lediglich wenig mehr als 1000 Lastspiele auf, wohingegen die Lage aus dem R-Glas bereits etwa 6000 Lastspiele vor Desintegrierung der Probe überdauert. Die einzelnen Meßpunkte wurden so erhalten, daß die oben beschriebene Probe solange einer bestimmten Dehnung, z.B. 1,5%, ausgesetzt wird, bis die Desintegrierung der Probe beginnt, wobei dies dann die maximal ertragbare Dehnung bei einer bestimmten Anzahl von Lastwechseln ist. Dem Diagramm ist zu entnehmen, daß die Lage mit dem R-Glas etwa 15% größere maximale ertragbare Dehnung aufweist als die Lage mit dem E-Glas.

Tabelle 1:

|  | E-Glas | R-Glas |
|---|---|---|
| $SiO_2$ | 51-55 | 60 |
| $Al_2O_3$ | 13-15 | 25 |
| CaO ) | 20-24 | 9 |
| MgO |  | 6 |
| $B_2O_3$ | 6-9 | - |
| $K_2O$ ) | < 1 | - |
| $Na_2O$ |  |  |
| Spez. Dichte ($g/cm^3$) | 2,60 | 2,55 |
| Bruchdehnung (%) | 3,3 | 4,2 |
| Zugfestigkeit (des UD-verstärkten Laminates, auf 100% Glas umgerechnet, $N/mm^2$) | 2500 | 3750 |
| E-Modul ($N/mm^2$) | 73000 | 86000 |

**Patentansprüche**

1. Blattfeder mit zumindest zwei unterschiedlichen miteinander verbundenen Lagen (1, 3) aus faserverstärktem, duroplastischem Kunststoff mit gleichen Anteilen an in Federlängsrichtung orientierten Fasern (2, 4), wobei die zur Zugseite der Blattfeder nähere Lage (3) dünnere Fasern (4), eine geringere Dicke und eine höhere Dauerfestigkeit bei schwingender Belastung aufweist als die andere Lage (1), **dadurch gekennzeichnet,** daß die zur Zugseite nähere Lage (3) eine zumindest um 10%, vorzugsweise 15%, höhere ertragbare Dehnung bei schwingender Belastung bis $10^5$ Lastwechseln aufweist, und daß die Dicke dieser Lage (3) mit der höheren ertragbaren Dehnung 1% bis 10% der Gesamtdicke der Blattfeder beträgt.

2. Blattfeder nach Anspruch 1, dadurch gekennzeichnet, daß eine weitere Lage (5) auf der und mit dieser verbundenen Lage (3) mit der höheren maximal ertragbaren Dehnung vorgesehen ist, die als Fasereinlage ein in Federlängsrichtung orientiertes Vlies aus organischen Fasern aufweist.

3. Blattfeder nach Anspruch 2, dadurch gekennzeichnet, daß die weitere Lage (5) Kanten der Blattfeder umgreift, insbesondere auch die Lage (1) mit der niedrigeren maximal ertragbaren Dehnung zumindest teilweise umgreift.

4. Blattfeder nach einem der Ansprüche 1, 2 oder 3, dadurch gekennzeichnet, daß die Fasern (2) der Lage (1) mit der niedrigeren maximal ertragbaren Dehnung mit anorganischem Glas aufgebaut sind.

5. Blattfeder nach einem der Ansprüche 1 bis 4, dadurch gekennzeichnet, daß die Fasern (4) der Lage (3) mit der höheren maximal ertragbaren Dehnung mit anorganischem Glas aufgebaut sind.

6. Blattfeder nach einem der Ansprüche 1 bis 5, dadurch gekennzeichnet, daß die Fasern (4) der Lage (3) mit der höheren maximal ertragbaren Dehnung Aramidfasern sind.

## Claims

1. A leaf spring with at least two different layers (1, 3) of fibre-reinforced duroplastic synthetic material joined together, with the same proportion of fibres (2, 4) orientated in the longitudinal direction of the spring, the layer (3) closer to the tension side of the leaf spring having thinner fibres (4), a smaller thickness and a greater fatigue strength with an oscillating load than the other layer (1), characterized in that the layer (3) closer to the tension side has a tolerable expansion higher by at least 10%, preferably 15%, with an oscillating load of up to $10^5$ load alternation, and the thickness of this layer (3) with the higher tolerable expansion amounts to from 1% to 10% of the total thickness of the leaf spring.

2. A leaf spring according to Claim 1, characterized in that a further layer (5) is provided on the layer (3) joined thereto with the higher maximum tolerable expansion, which has a fibre inlay in the form of a fleece of organic fibres orientated in the longitudinal direction of the spring.

3. A leaf spring according to Claim 2, characterized in that the further layer (5) embraces edges of the leaf spring, and in particular also at least partly embraces the layer (1) with the lower maximum tolerable expansion.

4. A leaf spring according to any one of Claims 1, 2 or 3, characterized in that the fibres (2) of the layer (1) with the lower maximum tolerable expansion are formed by inorganic glass.

5. A leaf spring according to any one of Claims 1 to 4, characterized in that the fibres (4) of the layer (3) with the higher maximum tolerable expansion are formed by inorganic glass.

6. A leaf spring according to any one of Claims 1 to 5, characterized in that the fibres (4) of the layer (3) with the higher maximum tolerable expansion are aramid fibres.

## Revendications

1. Ressort à lames équipé d'au moins deux couches (1, 3) différentes réunies l'une à l'autre en matière plastique thermodurcissable, renforcée à l'aide de fibres, avec des quantités égales de fibres (2, 4) orientées dans le sens longitudinal du ressort, la couche (3) plus proche du côté traction du ressort comportant des fibres plus minces (4), une épaisseur moindre et une résistance permanente plus élevée aux charges oscillantes que l'autre couche (1), caractérisé en ce que la couche (3) plus proche du côté tendu présente un allongement admissible maximal plus élevé d'environ 10%, de préférence 15%, sous une surcharge oscillante de jusqu'à $10^5$ d'alternance d'effort, et en ce que l'épaisseur de cette couche (3) à l'allongement admissible maximal plus élevé constitue 1% à 10% de l'épaisseur totale du ressort à lames.

2. Ressort à lames selon la revendication 1, caractérisé en ce qu'une autre couche (5) est prévue sur et liée à la couche (3) à l'allongement admissible maximal plus élevé, qui présente en tant qu'âme fibreuse une toison orientée dans le sens longitudinal du ressort en fibres organiques.

3. Ressort à lames selon la revendication 2, caractérisé en ce que l'autre couche (5) entoure les bords du ressort à lames, en particulier entoure également au moins partiellement la couche (1) avec l'allongement admissible maximal plus faible.

4. Ressort à lames selon l'une des revendication 1, 2 ou 3, caractérisé en ce que les fibres (2) de la couche (1) avec l'allongement admissible maximal plus faible sont réalisées en verre inorganique.

5. Ressort à lames selon une des revendications 1 à 4, caractérisé en ce que les fibres (4) de la couche (3) avec l'allongement admissible maximal plus élevé sont réalisées en verre inorganique.

6. Ressort à lames selon une des revendications 1 à 5, caractérisé en ce que les fibres (4) de la couche (3) avec l'allongement admissible maximal plus élevé sont des fibres en aramide.

Fig. 1

EP 0 202 218 B2

Fig. 2